# EUROPÄISCHE PATENTANMELDUNG

(11) **EP 0 649 765 A1**
(43) Veröffentlichungstag der Anmeldung: **26.04.1995**
(21) Anmeldenummer: 94114410.7
(22) Anmeldetag: 14.09.1994
(51) Int. Cl.: B60J 7/22, B60J 7/20

(54) **Betätigungseinrichtung für ein Verdeck und einen Verdeckkastendeckel eines Kraftfahrzeuges**

(30) Priorität: 23.10.1993 DE 4336278
(71) Anmelder: Dr.Ing.h.c. F. Porsche Aktiengesellschaft, D-70435 Stuttgart (DE)
(72) Erfinder: Thomas, Peter, D-75233 Tiefenbronn (DE); Zeissner, Alexander, D-75428 Illingen (DE); Pfertner, Kurt, D-71254 Ditzingen (DE); Aydt, Matthias, D-71735 Eberdingen (DE); May, Herbert, D-71254 Ditzingen (DE); Kleemaan, Klaus, D-75217 Birkenfeld (DE)

(57) **Zusammenfassung**

Eine Betätigungseinrichtung für ein Verdeck (2) und einen Verdeckkastendeckel (3) eines Kraftfahrzeuges umfaßt einen Betätigungshebel (12) und eine Verstelleinrichtung (14), wobei mit dem vom fahrerseitigen Sitz (8) aus verschwenkbaren Betätigungshebel (12) der Verdeckkastendeckel (3) zwischen einer Schließstellung (BSD1) und einer Offenstellung (BSD2) und das Verdeck (2) zwischen einer zweiten Betriebsstellung (BSV2) und einer dritten Betriebsstellung (BSV3) bewegbar sind.

Um eine Betätigungseinrichtung der eingangs genannten Gattung so weiterzubilden, daß sie bei einfachem Aufbau eine gute Funktion aufweist, Fehlbedienungen vermeidet und leicht handbar ist, ist vorgesehen, daß durch Verschwenken des Betätigungshebels (12) in eine erste Richtung der Verdeckkastendeckel (3) durch die mit ihm zusammenwirkende Verstelleinrichtung (14) von einer Schließstellung (BSD1) in eine Offenstellung (BSD2) bewegt wird, in der ein erstes mit der Verstelleinrichtung (14) in Wirkverbindung stehendes Kupplungsteil (29) eine Aufnahmestellung D einnimmt, in der ein zweites am Verdeck (2) vorgesehenes Kupplungsteil (30) bei in der zweiten Betriebsstellung (BSV2) befindlichem Verdeck (2) in das erste Kupplungsteil (29) einrückbar ist und daß durch erneutes Verschwenken des Betätigungshebels (12) in eine zweite umgekehrte Richtung durch die eingerückte Kupplung (29) der Verdeckkastendeckel (14) und das Verdeck (2) gemeinsam nach unten in die Schließstellung (BSV1) bzw. die dritte Betriebsstellung (BSV3) bewegt werden.

## Beschreibung

Die Erfindung betrifft eine Betätigungseinrichtung für ein Verdeck und einen Verdeckkastendeckel eines Kraftfahrzeuges, mit der von einem fahrerseitigen Sitz aus mittels eines verschwenkbaren Betätigungshebels und einer Verstelleinrichtung der Verdeckkastendeckel zwischen einer Schließstellung und einer Offenstellung und das Verdeck zwischen einer zweiten Betriebsstellung und einer dritten Betriebsstellung bewegbar sind.

Bei einer bekannten Betätigungseinrichtung der eingangs genannten Gattung (DE-PS 358 286) ist benachbart des Fahrersitzes am Boden ein erster Betätigungshebel gelagert, der über Zugseile und Winkelhebel mit einer ersten Verstelleinrichtung verbunden ist. Diese am Hauptspriegel des Verdecks angreifende Verstelleinrichtung wird durch zwei Zahnsegmente gebildet, die in Eingriff miteinander stehen.
Zur Bewegung des Verdeckkastendeckels ist am ersten Betätigungshebel ein zweiter Zugseilabschnitte mit drehbar gelagerten Winkelhebeln verbunden ist. Jeder Winkelhebel ist durch ein Seil an einen weiteren drehbar gelagerten Winkelhebel angeschlossen.
Beide Teile des zweiteilig ausgebildeten Verdeckkastendeckel sind über Schwenkarme am Aufbau gelagert, wobei zwischen den beiden Schwenkarmen Verbindungsstangen vorgesehen sind.
An einer Kurbel des Schwenkarmes greift außer der Verbindungsstange noch ein Winkel an, der durch eine Schubstange mit dem Winkelhebel mit Hilfe des Führungszapfens verbunden ist. Der Führungszapfen greift in einen Schlitz des untenliegenden Zahnsegmentes ein.
Diese Betätigungseinrichtung weist einen aufwendigen Aufbau aus, da sowohl für den Verdeckkastendeckel als auch für das Verdeck getrennte Verstelleinrichtungen mit separaten Betätigungshebeln vorgesehen sind. Ferner verursacht die zweiteilige Ausbildung des Verdeckkastendeckels einen hohen Herstellungs- und Lagerungsaufwand am Aufbau.
Darüber hinaus muß für die einzelnen Bauteile - insbesondere für die geradlinig verlaufenden Zugseile - ein geeigneter Bauraum innerhalb des Fahrgastraumes bereitgestellt werden, wodurch die freie Gestaltung innerhalb des Fahrgastraumes beeinträchtigt wird.

Aufgabe der Erfindung ist es, eine Betätigungseinrichtung für ein Verdeck und einen Verdeckkastendeckel eines Kraftfahrzeuges gemäß der eingangs genannten Gattung so weiterzubilden, daß sie bei einfachem Aufbau eine leichtgängige sowie sichere Funktion aufweist und dem Öffnungs- und Schließbewegungen ausführenden Fahrzeuginsassen aktiv erlebbare Technik vermittelt.

Erfindungsgemäß wird diese Aufgabe durch die kennzeichnenden Merkmale des Anspruchs 1 gelöst. Weitere, die Erfindung in vorteilhafter Weise ausgestaltenden Merkmale enthalten die Unteransprüche.

Die mit der Erfindung hauptsächlich erzielten Vorteile sind darin zu sehen, daß durch die Anordnung von lediglich einer am Verdeckkastendeckel angreifenden Verstellvorrichtung und einer lösbaren Kupplung zwischen Verdeck und Verdeckkastendeckel eine Betätigungseinrichtung geschaffen wird, die bei einfachem Aufbau leicht handhabbar ist, eine gute Funktion aufweist und relativ wenig Bauteile und Bauraum benötigt, so daß die freie Gestaltung innerhalb des Fahrgstraumes nicht eingeschränkt wird. Darüber hinaus ist sie so ausgestattet, daß der das Verdeck bedienende Fahrzeuginsasse unternehmend in den Verdeckbetätigungsvorgang eingegliedert ist.

Durch die Anbringung des Betätigungshebels, es wird nur ein einziger benötigt, an der bewegbaren, oberen Verstellschiene des Sitzes ist der Betätigungshebel in jeder eingestellten Position des längsverstellbaren Fahrersitzes funktionsgerecht erreichbar. Das zwischen Betätigungshebel und Verstelleinrichtung vorgesehene Hydrauliksystem erfüllt vorzüglich die Übertragungsabläufe und ist leicht montierbar, wobei die Verbindungsleitungen jeden beliebigen Verlauf zwischen Betätigungshebel und Verstelleinrichtung einnehmen können im Gegensatz zu den geradlinigen Zugseilen.

Durch die rahmenartig ausgebildete Lagerbrücke können große Kräfte aufgenommen und in den Aufbau übertragen werden. Die sich an den Federbeindomen abstützenden Seitenteile der Lagerbrücke bewirken in Verbindung mit dem Mittelteil eine zusätzliche Versteifung des Hinterwagens des Kraftfahrzeuges.
Die Verstelleinrichtung umfaßt wenige Bauteile, die einfach und kostengünstig herstellbar sind. Durch die zweiteilige Ausbildung der Lenkhebel lassen sich Toleranzen zwischen Aufbau und Verstelleinrichtung auf einfache Weise ausgleichen, so daß stets eine störungsfreie Betätigung der Verstelleinrichtung gegeben ist. Die trennbare Kupplung zwischen Verdeck und Verdeckkastendeckel ist eine leicht produzierbare, jedoch hochwirksame Vorrichtung, wobei das erste mit dem Verdeckkastendeckel zusammenwirkende Kupplungsteil eine Anformung aufweist, die Fehlbedienungen des Verdecks bei nicht vollständig geöffnetem Verdeckkastendeckel vermeidet.

Am Antriebshebel der Verstelleinrichtung ist ein verschwenkbares mit dem Hydrauliksystem zusammenwirkendes Verriegelungsorgan vorgesehen, das zusammen mit einem Verriegelungshaken des Verdeckkastendeckels eine einfache Verdeckkastenverriegelung bildet.

Ein Ausführungsbeispiel der Erfindung ist in der Zeichnung näher dargestellt und wird im folgenden näher erläutert.

Es zeigt
- Fig. 1: eine Teilseitenansicht einer Betätigungseinrichtung für ein Verdeck und einen Verdeckkastendeckel eines Kraftfahrzeuges, wobei der Verdeckkastendeckel seine Schließstellung und das Verdeck seine erste Betriebsstellung einnimmt,
- Fig. 2: eine Teilseitenansicht der Betätigungseinrichtung für das Verdeck und den Verdeckkastendeckel, wobei der Verdeckkastendeckel seine Offenstellung und das Verdeck seine erste Betriebsstellung einnimmt,
- Fig. 3: eine Teilseitenansicht der Betätigungseinrichtung für das Verdeck und den Verdeckkastendeckel, wobei der Verdeckkastendeckel seine Offenstellung und das Verdeck seine zweite Betriebsstellung einnimmt,
- Fig. 4: eine Teilseitenansicht der Betätigungseinrichtung für das Verdeck und den Verdeckkastendeckel, wobei das Verdeck seine dritte Betriebsstellung und der Deckel seine Schließstellung einnimmt,
- Fig. 5: eine perspektivische Ansicht von schräg hinten auf die Verstelleinrichtung der Betätigungseinrichtung in Offenstellung des Verdeckkastendeckels,
- Fig. 6: die Einzelteile der Betätigungseinrichtung in Explosionsdarstellung,

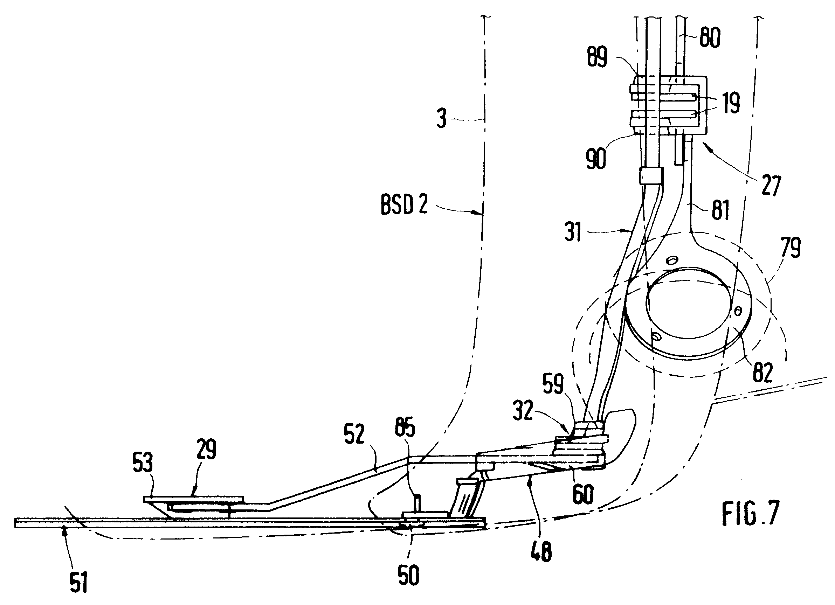

- Fig. 7: eine Teildraufsicht auf die Betätigungseinrichtung und den Verdeckkastendeckel in Offenstellung des Verdeckkastendeckels,
- Fig. 8: eine Teilseitenansicht von Bauteilen der Verstelleinrichtung in Schließstellung des Verdeckkastendeckels in größerem Maßstab,
- Fig. 9: einen Schnitt nach der Linie IX-IX der Fig. 8 in größerem Maßstab,
- Fig.10: eine Einzelheit X der Fig. 3 in größerem Maßstab,
- Fig.11: eine Einzelheit Y der Fig. 4 in größerem Maßstab,
- Fig.12: einen Schnitt nach der Linie XII-XII der Fig. 8 in größerem Maßstab,
- Fig.13: eine Teilseitenansicht der Verstelleinrichtung für den Verdeckkastendeckel in Schließstellung des Verdeckkastendeckels mit dem ersten Kupplungsteil,
- Fig.14: eine Teilseitenansicht der Verstelleinrichtung für den Verdeckkastendeckel in teilweise angehobener Stellung (Zwischenstellung) des Verdeckkastendeckels mit beiden Kupplungsteilen,
- Fig.15: eine Teilseitenansicht der Verstelleinrichtung für den Verdeckkastendeckel in Offenstellung des Verdeckkastendeckels mit dem ersten Kupplungsteil,
- Fig.16: einen Schnitt nach der Linie XVI-XVI der Fig. 2 in größerem Maßstab,
- Fig.17: einen Schnitt nach der Linie XVII-XVII der Fig. 11 in größerem Maßstab,
- Fig.18: eine Ansicht von vorne auf die Lagereinrichtung,

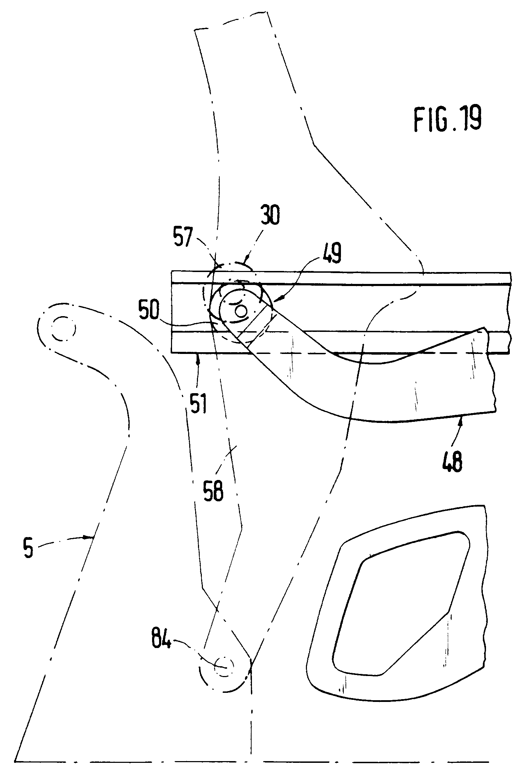

- Fig.19: eine Einzelheit Z der Fig. in größerem Maßstab.

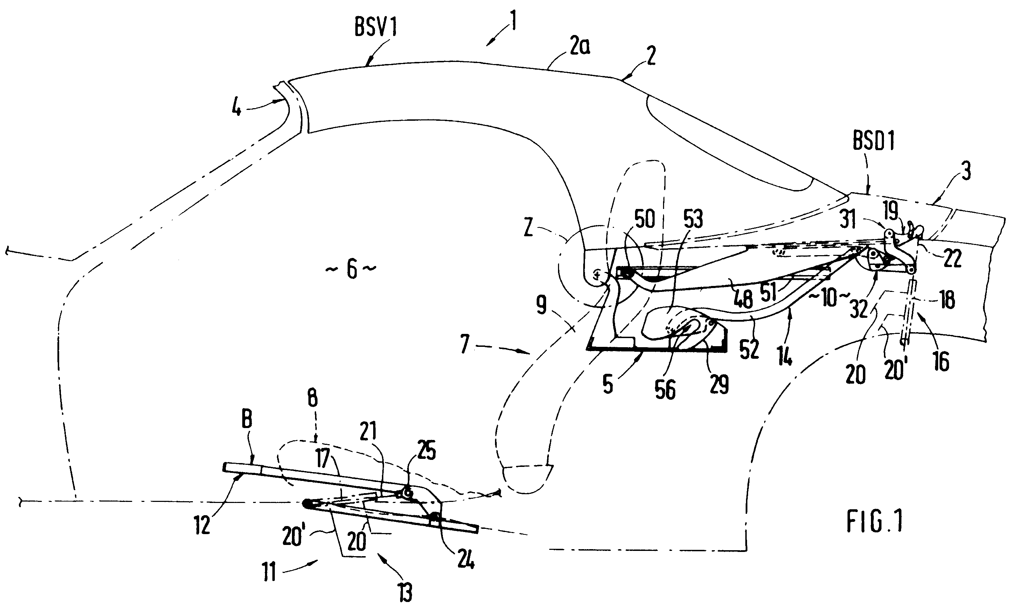

Fig. 1 zeigt einen Teilbereich eines durch einen zweisitzigen Personenkraftwagen gebildeten Kraftfahrzeuges 1, das im dargestellten Bereich ein Verdeck 2 und einen Verdeckkastendeckel 3 aufweist.
Das zusammenklappbare Verdeck 2 erstreckt sich in einer ersten Betriebsstellung BSV1 (Schließstellung) zwischen einem Windschutzscheibenrahmen 4 und einem vorderen Randbereich des Verdeckkastendeckels 3. Das Verdeck 2 ist in seiner ersten Betriebsstellung BSV1 über nicht näher dargestellte lösbare Verschlüsse am Windschutzscheibenrahmen 4 in Lage gehalten.

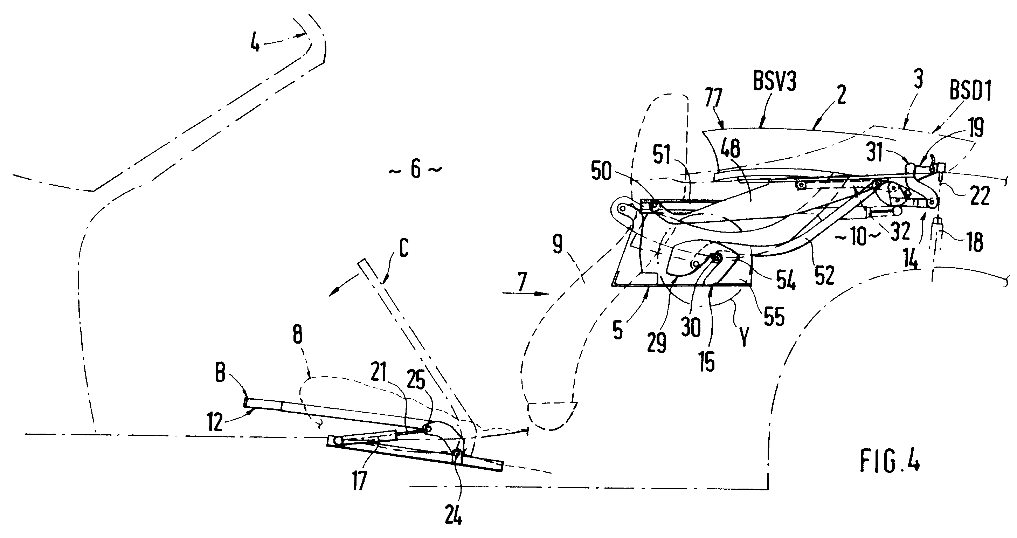

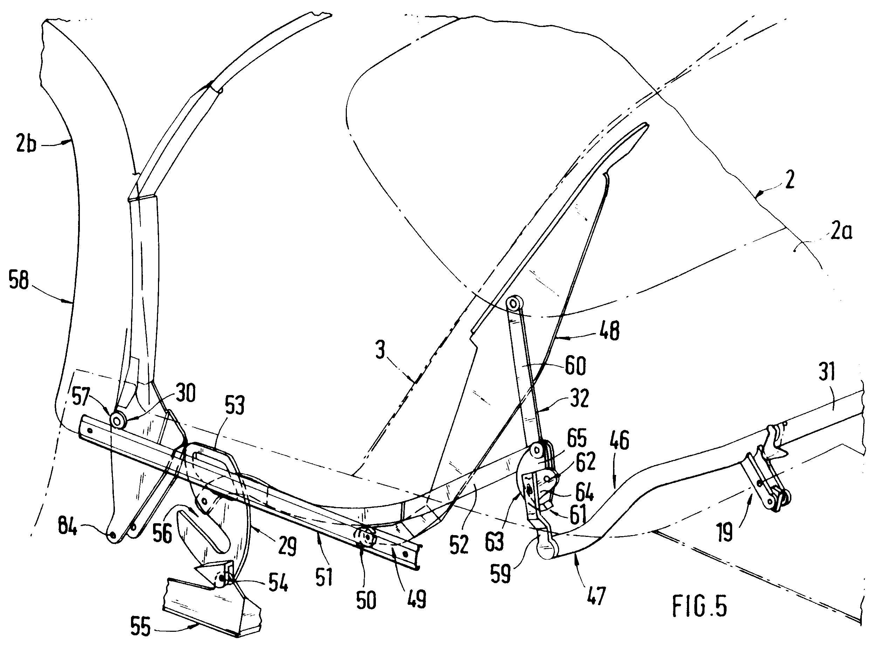

Gemäß Fig. 5 setzt sich das Verdeck 2 in herkömmlicher Weise aus einem Verdeckbezug 2a und einem Verdeckgestänge 2b zusammen, wobei das Verdeckgestänge 2b an beiden Fahrzeuglängsseiten an aufbauseitigen Verdecklagern 5 angelenkt ist.
Innerhalb eines Fahrgastraumes 6 sind gemäß den Fig. 1 bis 4 Sitze 7 angeordnet, wobei jeder Sitz 7 ein in Fahrzeuglängsrichtung verstellbares Sitzteil 8 und eine verschwenkbare Rückenlehne 9 umfaßt.
Beide Sitze 7 sind über längsgerichtete Führungen mit dem Fahrzeugaufbau (Boden) verbunden.
Jede Führung weist eine erste, bodenseitig angebrachte , feststehende Sitzschiene auf, die mit einer zweiten, am verschiebbaren Sitzteil 8 befestigten Sitzschiene in Wirkverbindung steht (nicht näher dargestellt). Hinter den beiden Sitzen 7 ist ein Verdeckkasten 10 zur versenkten Aufnahme des zurückgeklappten Verdecks 2 vorgesehen, wobei der Verdeckkasten 10 nach oben hin zumindest abschnittsweise durch den Verdeckkastendeckel 3 abgedeckt ist. Gemäß Fig. 4 deckt ein zurückgeschwenkter, vorderer Verdeckabschnitt 77 des Verdecks 2 einen vor dem Verdeckkastendeckel 3 liegenden, großflächtigen Bereich des Verdeckkastens 10 ab und bildet in diesem Bereich quasi eine obere Abdeckung.

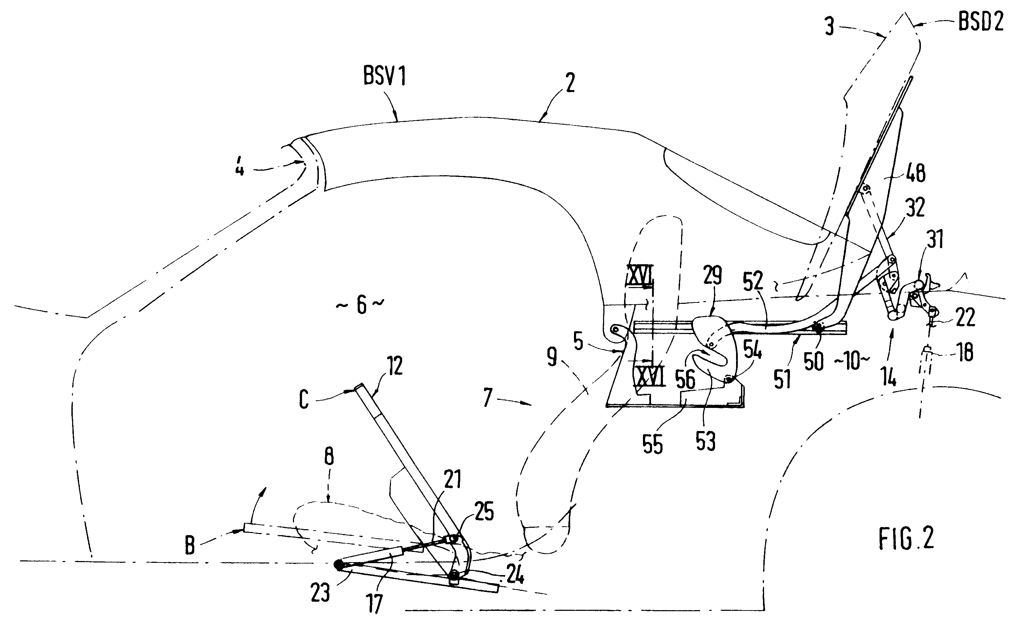

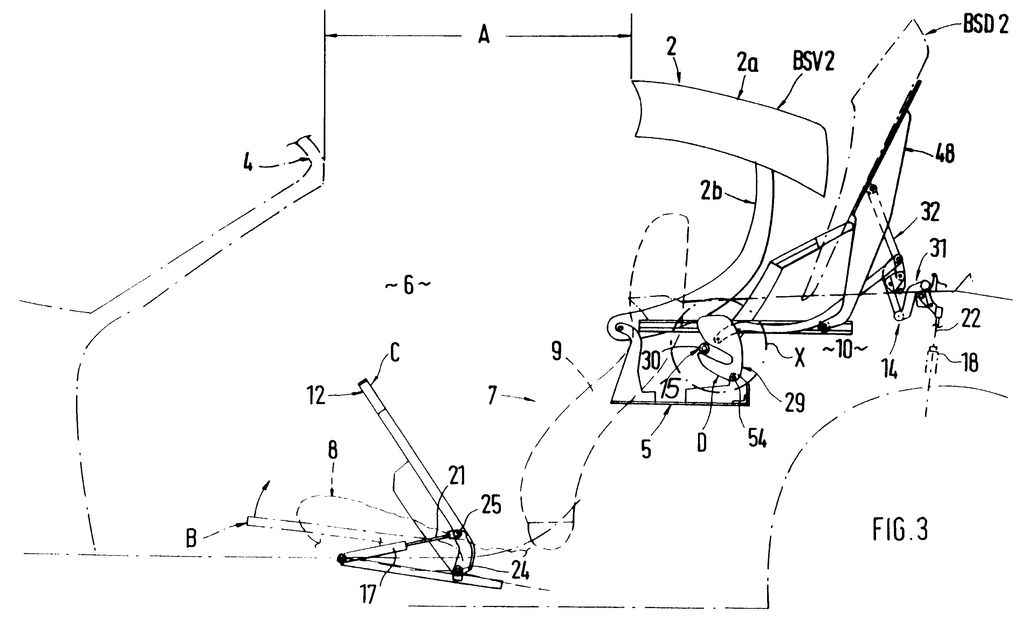

Das Verdeck 2 ist von einer ersten Betriebsstellung BSV1 (Schließstellung Fig. 1 und 2) nach hinten über eine zweite Betriebsstellung BSV2 (Zwischenstellung Fig. 3) in eine dritte Betriebsstellung BSV3 (Ablagestellung Fig. 4) bewegbar und umgekehrt. Der Verdeckkastendeckel 3 ist zwischen einer Schließstellung BSD1 (Fig. 1 und 4) und einer Offenstellung BSD2 (Fig. 2 und 3) bewegbar. In der zweiten Betriebsstellung BSV2 ist das Verdeck 2 um einen Betrag A vom Windschutzscheibenrahmen 4 nach hinten verschwenkt (Fig. 3).

Mittels einer Betätigungseinrichtung 11 läßt sich der Verdeckkastendeckel 3 von der Schließstellung BSD1 in eine Offenstellung BSD2 und das Verdeck 2 von der zweiten Betriebsstellung BSV2 in die dritte Betriebsstellung BSV3 bewegen und umgekehrt und zwar unmittelbar vom fahrerseitigen Sitz 7 aus.
Die Betätigungseinrichtung 11 umfaßt einen im Fahrgastraum 6 benachbart dem fahrerseitigen Sitz 7 angeordneten Betätigungshebel 12, der über ein Übertragungsorgan 13 mit einer, benachbart des Verdeckkastendeckels 3 angeordneten Verstelleinrichtung 14 verbunden ist. Ferner umfaßt die Betätigungseinrichtung 11 eine lösbare Kupplung 15.

Das Übertragungsorgan 13 zwischen dem Betätigungshebel 12 und der Verstelleinrichtung 14 kann mechanisch, hydraulisch, pneumatisch oder elektrisch ausgebildet sein.

Im Ausführungsbeispiel wird das Übertragungsorgan 13 durch ein Hydrauliksystem 16 gebildet, wobei das Hydrauliksystem 16 als geschlossenes Geber-Nehmerzylindersystem ohne Ausgleichsbehälter ausgebildet ist.

Der Geberzylinder 17 wirkt mit dem Betätigungshebel 12 zusammen, wogegen der Nehmerzylinder 18 mit einem Antriebshebel 19 der Verstelleinrichtung 14 in Wirkverbindung steht. Geberzylinder 17 und Nehmerzylinder 18 sind durch zwei getrennte Hydraulikleitungen 20, 20' miteinander verbunden. Der Geberzylinder 17 weist eine bewegliche Kolbenstange 21 und der Nehmerzylinder eine bewegliche Kolbenstange 22 auf (Fig.1).

Der Geberzylinder 17 ist gemäß Fig. 2 an einer Grundplatte 23, die auch den verschwenkbaren Betätigungshebel 12 trägt, gelagert. Ein freies Ende der Kolbenstange 21 ist gelenkig mit dem verschwenkbaren Betätigungshebel 12 verbunden und zwar oberhalb einer Drehachse 24 des Betätigungshebels 12 (siehe Bezugszeichen 25).

In der etwa horizontal ausgerichteten Ruhestellung B des Betätigungshebels 12 befindet sich die Kolbenstange 21 in ihrer maximal eingefahrenen Lage, wogegen die Kolbenstange 22 des Nehmerzylinders 18 ihre maximal ausgefahrene Lage einnimmt (Fig. 1).

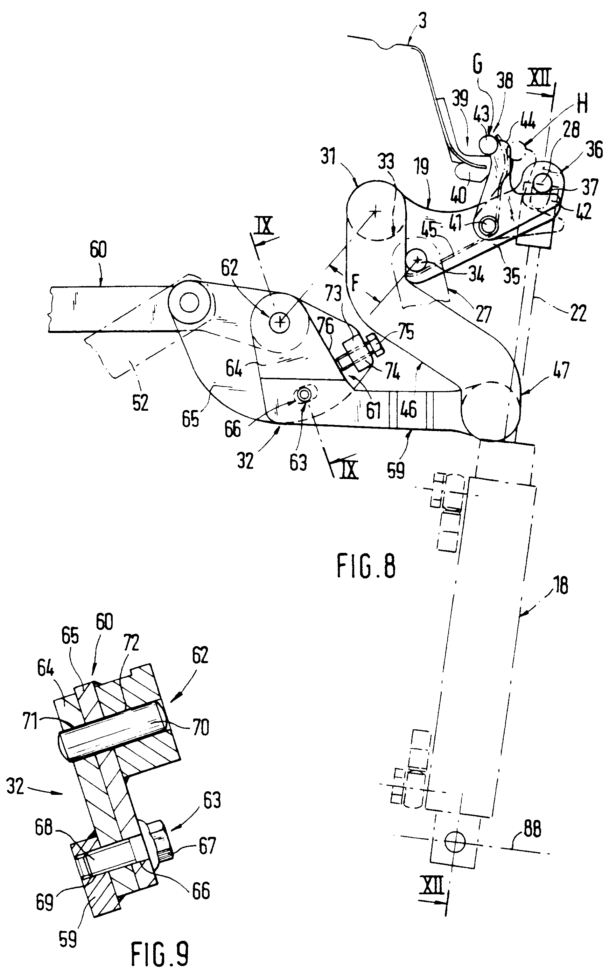

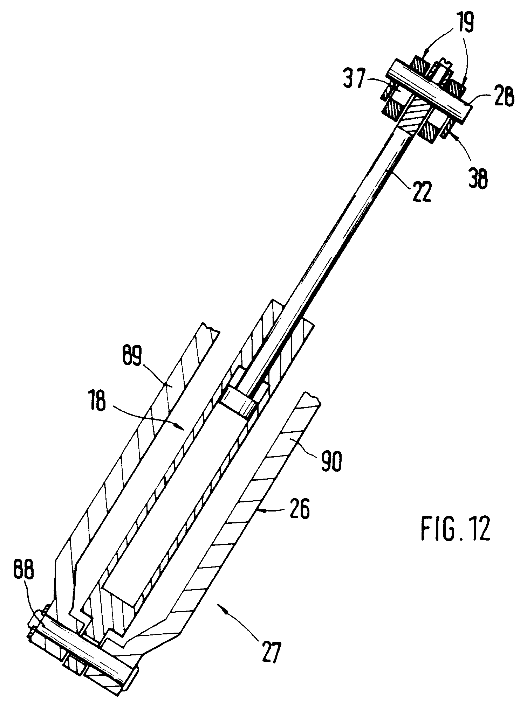

Der Nehmerzylinder 18 ist an einer Aufnahme 26 einer Lagerbrücke 27 drehbar gelagert, wobei das freie obere Ende der Kolbenstange 22 über einen querverlaufenden Bolzen 28 mit dem gabelförmigen Antriebshebel 19 der Verstelleinrichtung 14 zusammenwirkt. Der vom fahrerseitigen Sitz 7 aus bewegbare Betätigungshebel 12 ist vorzugsweise am längsbeweglichen Sitzteil 8 angeordnet, wobei die den verschwenkbaren Betätigungshebel 12 aufnehmende Grundplatte 23 an der oberen beweglichen Sitzschiene befestigt ist. Dies kann durch Schrauben, Nieten, Schweißen oder dgl. erfolgen (Fig. 8, 12 und 18).

In Schließstellung BSD1 des Verdeckkastendeckels 3 ist der Betätigungshebel 12 etwa horizontal ausgerichtet und nimmt eine Ruhestellung B ein. Der Betätigungshebel 12 erstreckt sich zwischen der Außenseite des Sitzes 7 und dem angrenzenden, nicht näher dargestellten außenliegenden Schweller.
Der Betätigungshebel 12 ist ähnlich wie ein Handbremshebel in seiner Ruhestellung B arretiert, d.h. er ist erst nach Lösen einer Arretierung verschwenkbar.

Durch Verschwenken des Betätigungshebels 12 in eine erste Richtung (Fig.2 und 3) wird der Verdeckkastendeckel 3 durch die mit ihm zusammenwirkende Verstelleinrichtung 14 von der Schließstellung BSD1 nach oben und hinten in die Offenstellung BSD2 bewegt.
Der Betätigungshebel 12 wird bei diesem Vorgang gemäß Fig. 2 nach oben in eine angestellte Wirkstellung C verschwenkt.
In der Schließstellung BSD1 ist der Verdeckkastendeckel 3 gemäß Fig. 1 annähernd horizontal ausgerichtet, wogegen er in der Offenstellung BSD2 eine aufrechte, schräg nach hinten oben verlaufende Lage einnimmt (Fig. 2 und 3).

In der Offenstellung BSD2 des Verdeckkastendeckels 3 nimmt ein mit der Verstelleinrichtung 14 in Wirkverbindung stehendes erstes Kupplungsteil 29 der trennbaren Kupplung 15 eine Aufnahmestellung D ein, in der ein zweites am Verdeck 2 vorgesehenes Kupplungsteil 30 bei in der zweiten Betriebsstellung BSV2 befindlichem Verdeck 2 in das erste Kupplungsteil 29 einrückbar ist.
Durch erneutes Verschwenken des Betätigungshebels 12 von der Wirkstellung C in eine zweite, umgekehrte Richtung nach unten in die Ruhestellung B werden durch die eingerückte Kupplung 15 der Verdeckkastendeckel 3 und das Verdeck 2 gemeinsam nach unten in die Schließstellung BSD1 bzw. die dritte Betriebsstellung BSV3 bewegt. In der dritten Betriebsstellung BSV3 befindet sich das Verdeck 2 im heckseitigen Verdeckkasten 10 und ist zumindest abschnittsweise durch den Verdeckkastendeckel 3 abgedeckt.
Von der ersten Betriebsstellung BSV1 in die zweite Betreibsstellung BSV2 wird das Verdeck 2 manuell bewegt und zwar nach Lösen der nicht näher dargestellten Verschlüsse am Windschutzscheibenrahmen 4.

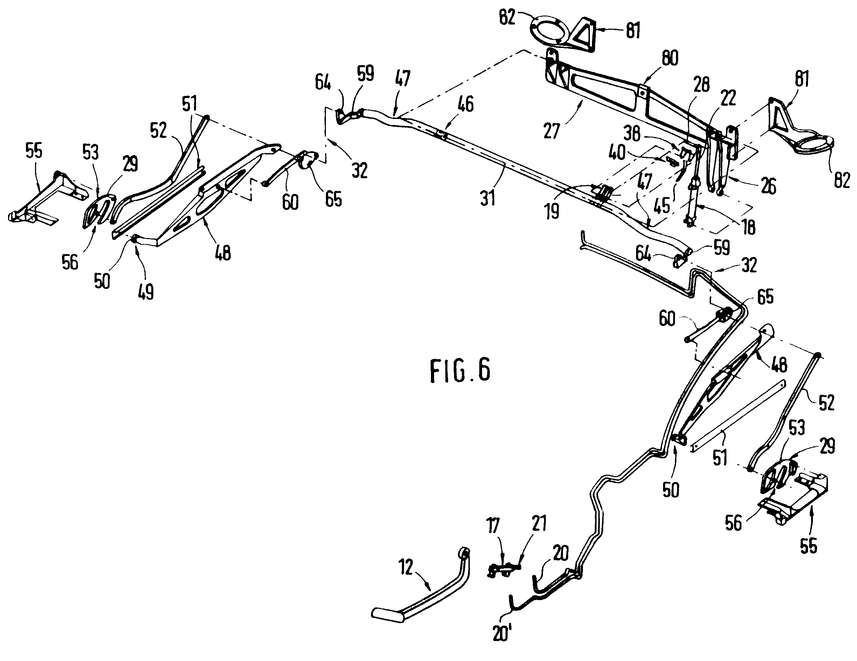

Die Verstelleinrichtung 14 umfaßt ein mit dem Antriebshebel 19 fest verbundenes, an der Lagerbrücke 27 drehbar aufgenommenes Querrohr 31, das an seinen beiden Längsseiten über einen Lenkhebel 32 mit dem Verdeckkastendeckel 3 gelenkig verbunden ist (Fig. 5 und 6).
Der gabelförmig ausgebildete Antriebshebel 19 ist an seinem einen Ende 33 durch Schweißen fest mit dem Querrohr 31 verbunden und über einen querverlaufenden Bolzen 34 gelenkig mit der bestehenden Lagerbrücke 27 verbunden. Das Querrohr 31 verläuft mit Abstand F zum Bolzen 34. Ein langgestreckter Schenkel 35 des Antriebhebels 19 ist vom Querrohr 31 weggeführt und weist an seinem freien Ende 36 eine längliche Schlitzöffnung 37 auf, in der der mit der Kolbenstange 22 verbundene Bolzen 28 verschiebbar geführt ist (in Höhenrichtung). Der Bolzen 28 wirkt mit einem Verriegelungsorgan 38 einer Verriegelungseinrichtung 39 für den Verdeckkastendeckel 3 zusammen (Fig. 8).

Die Verriegelungseinrichtung 39 besteht aus einem am Innenblech des Verdeckkastendeckels 3 angeordneten feststehenden Verriegelungshaken 40 und dem schwenkbaren, federbelasteten Verriegelungsorgan 38, das am Antriebshebel 19 um eine Querachse 41 drehbar gelagert ist. Das winkelförmige Verriegelungsorgan 38 untergreift mit einem Schenkel 42 den Bolzen 28, wobei der Bolzen 28 bei verriegeltem Verdeckkastendeckel 3 (Verriegelungsstellung G) am oberen Ende der Schlitzöffnung 37 anliegt. Bei verriegeltem Verdeckkastendeckel 3 drückt der querverlaufende Zapfen 43 von oben gegen den Verriegelungshaken 40 des Verriegelungsorganes 38. Beim Öffnen des Verdeckkastendeckels 3 wird die Kolbenstange 22 des Nehmerzylinders 18 um einen geringen Betrag nach unten bewegt, wodurch der Bolzen 28 in den Schlitzöffnungen 37 nach unten gleitet und den Schenkel 42 des Verriegelungsorganes 38 verschwenkt. Dadurch wird der andere Schenkel 44 des Verriegelungsorganes 38 im Uhrzeigersinn bewegt und gelangt außer Eingriff mit dem Verriegelungshaken 40 (Entriegelungsstellung H). Durch weiteres Einziehen der Kolbenstange 22 wird der Verdeckkastendeckel 3 in seine Offenstellung BSD2 bewegt. Eine Schenkelfeder 45 des Verriegelungsorganes 38 umgibt abschnittsweise die Querachse 41 und stützt sich mit Endabschnitten am Zapfen 43 und am Bolzen 34 ab (Fig. 8).

Das Querrohr 31 ist neben dem Antriebshebel 19 über einen weiteren mit Abstand zu diesem verlaufenden Halter 46 gelenkig mit der feststehenden Lagerbrücke 27 verbunden, wobei die durch den Bolzen 34 gebildete, querverlaufende Achse die ortsfeste Drehachse für die Verstelleinrichtung 14 bildet.

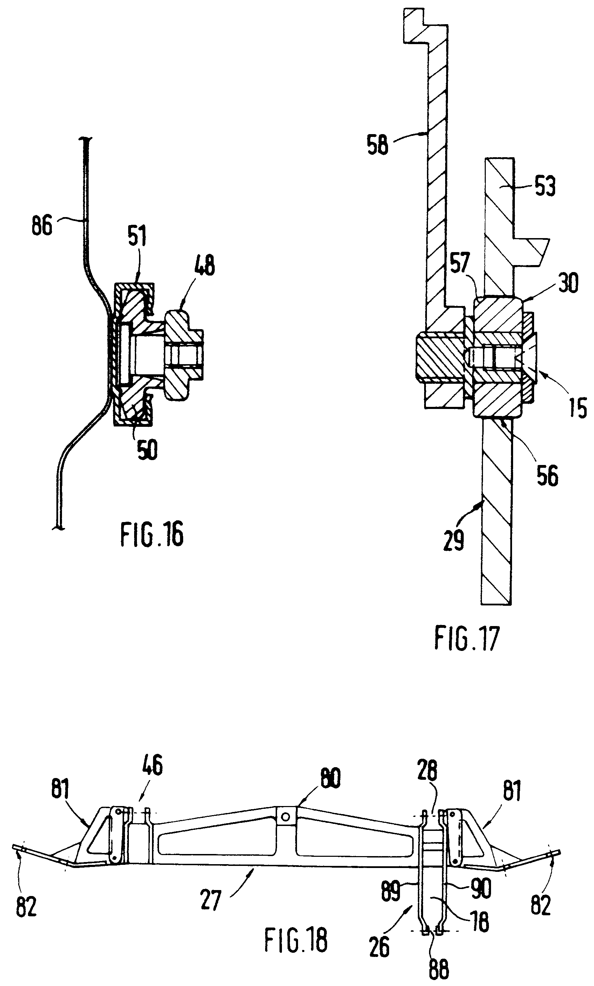

Das Querrohr 31 ist zwischen dem Halter 46 und dem Antriebshebel 19 annähernd geradlinig ausgebildet und etwa horizontal ausgerichtet. Außerhalb der beiden Lagerstellen ist das Querrohr 31 abschnittsweise gebogen, wobei sich an diese gebogenen Abschnitte 47 geradlinige Endbereiche anschließen.
Die Endbereiche des Querrohres 31 sind mit den Lenkhebeln 32 starr verbunden. Ferner umfaßt die Verstelleinrichtung 14 auf jeder Längsseite des Verdeckkastendeckels 3 einen langgestreckten Führungsarm 48, der an der Unterseite des Verdeckkastendeckels 3 befestigt ist.
Ein den Verdeckkastendeckel 3 nach vorne hin überragender Bereich 49 des Führungsarmes 48 ist mit einer drehbaren Rolle 50 versehen, die mit einer aufbauseitig feststehenden länglichen Führungsschiene 51 zusammenwirkt. Die Führungsschiene 51 weist im Querschnitt gesehen ein etwa C-förmiges Profil auf, wobei die Rolle 50 innerhalb der Führungsschiene 51 drehbar aufgenommen ist (Fig. 16). Die Führungsschiene 51 ist an mehreren Stellen an einer aufrechten Aufbauwand 86 durch Schrauben oder dgl. befestigt.
In der Seitenansicht gesehen ist die in Fahrzeuglängsrichtung verlaufende horizontal ausgerichtete Führungsschiene 51 so angeordnet, daß die offene Seite des stehenden C-Profils der innenliegenden Rolle 50 zugekehrt ist.

Vom Lenkhebel 32 ist eine Schubstange 52 weggeführt, die mit dem ersten Kupplungsteil 29 und dem Lenkhebel 32 jeweils drehbar verbunden ist.

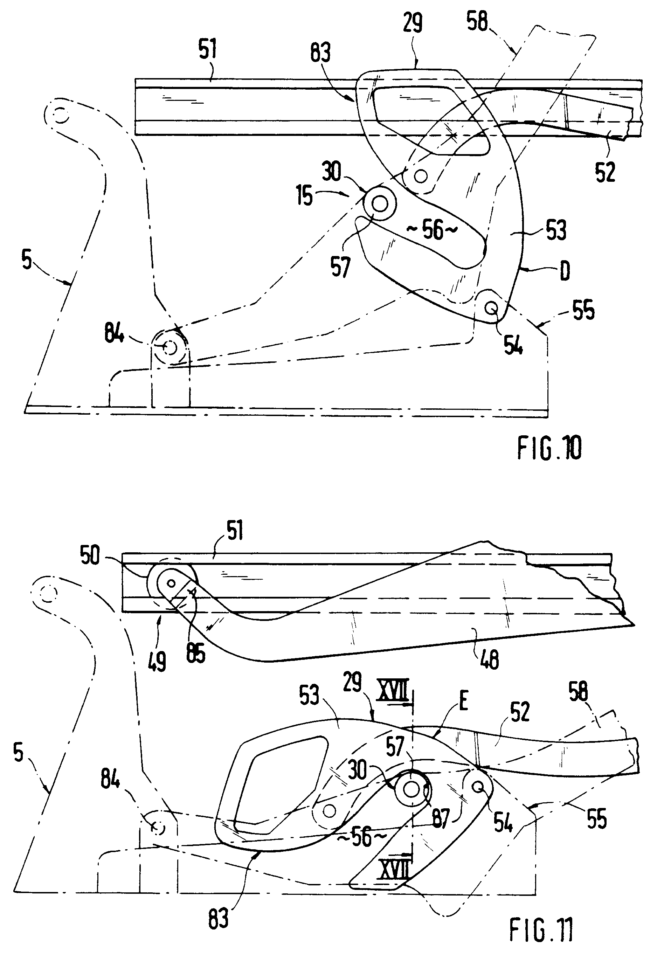

Das erste Kupplungsteil 29 wird durch einen schwenkbaren Kulissenhebel 53 gebildet, der um eine querverlaufende Drehachse 54 einer Konsole 55 dregbar gelagert ist und eine längliche, einseitig offene Schlitzöffnung 56 aufweist, in die das zweite Kupplungsteil 30 einrückbar bzw. ausrückbar ist (Fig. 10). Eine obere und eine untere Begrenzung der Schlitzöffnung 56 weisen jeweils einen gebogenen Formverlauf auf. Die Schlitzöffnung 56 ist in Höhenrichtung gesehen etwas größer ausgebildet als das zweite Kupplungsteil 30. Zur Unterstützung der Schwenkbewegung des Kulissenhebels 53 kann eine Gasfeder vorgesehen sein, die einerseits am Kulissenhebel 53 und andererseits am Aufbau angelenkt ist (nicht näher dargestellt).
Zur offenen Seite hin erweitert sich die Schlitzöffnung 56, wodurch ein leichteres Einführen des zweiten Kupplungsteils 30 in das erste Kupplungsteil 29 erzielt wird. Das zweite Kupplungsteil 30 wird durch eine am Verdeck 2 angebrachte drehbare Rolle 57 gebildet, die an der Außenseite des Hauptspriegels 58 des Verdecks 2 angeordnet ist und sich in Richtung erstes Kupplungsteil 29 erstreckt (Fig. 17). Der Hauptspriegel 58 ist bei 84 um eine querverlaufende Drehachse des Verdecklagers 6 schwenkbar. Die Konsole 55 für den Kulissenhebel 53 ist am Verdecklager 5 befestigt.

Der Lenkhebel 32 kann entweder einteilig oder mehrteilig ausgebildet sein. Im Ausführungsbeispiel ist der Lenkhebel 32 aus zwei miteinander verbundenen Lenkern 59, 60 zusammengesetzt, wobei im gemeinsamen Verbindungsbereich eine Einstellvorrichtung 61 vorgesehen ist (Fig. 8). Durch diese kann die relative Lage der beiden Lenker 59, 60 zueinander in einem definierten Umfang verändert werden, um Toleranzen von Aufbau und Verstelleinrichtung 14 auszugleichen. Beide Lenker 59, 60 wirken über eine Gelenkverbindung 62 und eine Schraubverbindung 63 zusammen. An dem dem Querrohr 31 abgekehrten Ende des ersten kürzeren Lenkers 59 ist eine erste Platte 64 angeschweißt, die auf einer zweiten Platte 65 des anderen Lenkers 60 aufliegt.
Der erste Lenker 59 ist in der Draufsicht gesehen abgekröpft, wobei das mit der ersten Platte 64 verbundene Ende seitlich weiter außen liegt als das mit dem Querrohr 31 verbundene Ende. Die innenliegende erste Platte 64 ist - in der Seitenansicht gesehen - kleiner als die außenliegende zweite Platte 65.
Die Schraubverbindung 63 zwischen den beiden Lenkern 59, 60 ist im Bereich der beiden Platten 64, 65 vorgesehen.
Von der Außenseite her ist durch eine längliche Schlitzöffnung 66 die Befestigungsschraube 67 hindurchgeführt, die mit einem Gewindeabschnitt 68 in eine Gewindebohrung 69 der ersten Platte 64 bzw. des ersten Lenkers 59 eingedreht ist. Der Schraubenkopf stützt sich an der Außenseite der zweiten Platte 65 ab (Fig.9). Durch die längliche Schlitzöffnung 66 lassen sich die beiden Platten 64, 65 relativ zueinander verstellen.
Die Gelenkverbindung 62 umfaßt einen Zapfen 70, der durch korrespondierende zylindrische Bohrungen 71, 72 der beiden Platten 64, 65 sowie des zweiten Lenkers 60 hindurchgeführt ist.
An der zweiten Platte 65 ist an einer querverlaufenden abgestellten Wand 73 eine Gewindebohrung 74 vorgesehen, in die eine Stellschraube 75 eingedreht ist. Die Stellschraube 75 wirkt mit ihrem dem Kopf abgekehrten Ende mit einem Randabschnitt 76 der ersten Platte 64 zusammen.

Die mehrteilige Lagerbrücke 27 ist an einer nicht näher dargestellten, querverlaufenden Rückwand des Verdeckkastens 10 und an der Oberseite von seitlich außenliegenden Federbeindomen 79 abgestützt und daran befestigt.

Die Lagerbrücke 27 umfaßt ein als verwindungssteife Tragstruktur ausgebildetes Mittelteil 80 und zwei mit dem Mittelteil 80 durch Schrauben verbundene Seitenteile 81. Die Seitenteile 81 umfassen außenliegende kreisringförmige Abschnitte 82, die auf die Oberseite der Federbeindome 79 aufgesetzt und durch Schrauben mit diesen verbunden sind.

Durch die Anbindung der Lagerbrücke 27 an die Rückwand und die beiden Federbeindome 79 wird eine stabile, verdrehsteife Abstützung der Verstelleinrichtung 14 bewirkt, mit der sich hohe Kräfte aufnehmen lassen und eine Versteifung des Hinterwagens erzielt wird.

Am Mittelteil 80 der Lagerbrücke 27 ist in einem seitlich außenliegenden Bereich die aufrechte Aufnahme 26 zur gelenkigen Lagerung des unteren Endes des Nehmerzylinders 18 und des Antriebshebels 19 vorgesehen.

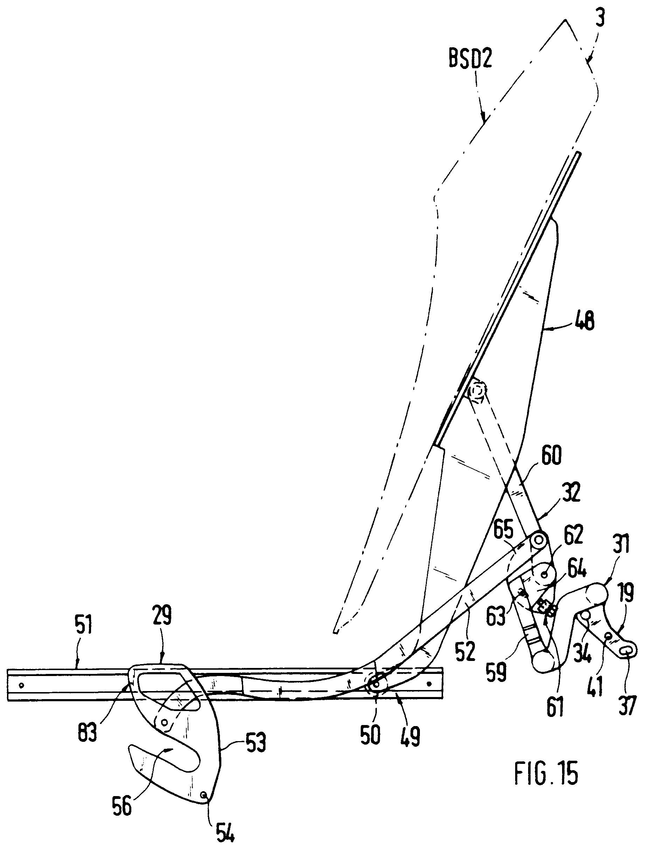

Am Kulissenhebel 53 ist oberhalb der Schlitzöffnung 56 ein Kurvenabschnitt 83 ausgebildet (Fig.15). Diese verhindert eine Fehlbedienung des Systems, in dem bei nicht vollständig geöffnetem Verdeckkastendeckel 3 das zweite Kupplungsteil 30 an diesem Kurvenabschnitt 83 anliegt, so daß das Verdeck 2 nicht nach weiter hinten bewegt werden kann. Erst wenn der Verdeckkastendeckel 3 vollständig geöffnet ist (Stellung BSD2), wird der Kulissenhebel 53 weiter verschwenkt und das zweite Kupplungsteil 30 des Verdecks 2 ist in die Schlitzöffnung 56 des ersten Kupplungsteils 29 einrückbar. Erst danach lassen sich Verdeck 2 und Verdeckkastendeckel 3 gemeinsam nach unten bewegen.
Am Führungsarm 48 ist benachbart der drehbaren Rolle 50 ein querverlaufender, abstehender Winkel 85 angebracht, der ein Bewegen des Verdecks 2 von der zweiten Betriebsstellung BSV2 in die dritte Betriebsstellung BSV3 verhindert, wenn der Verdeckkastendeckel 3 geschlossen ist (Fig.11). Die Aufnahme 26 wird durch zwei vertikale, beabstandete Stege 89, 90 gebildet, zwischen denen der untere Endbereich des Geberzylinders 18 und der Antriebshebel 19 aufgenommen sind. Der Geberzylinder 18 ist über einen querverlaufenden Steckbolzen 88 mit den Stegen 89, 90 gelenkig verbunden.

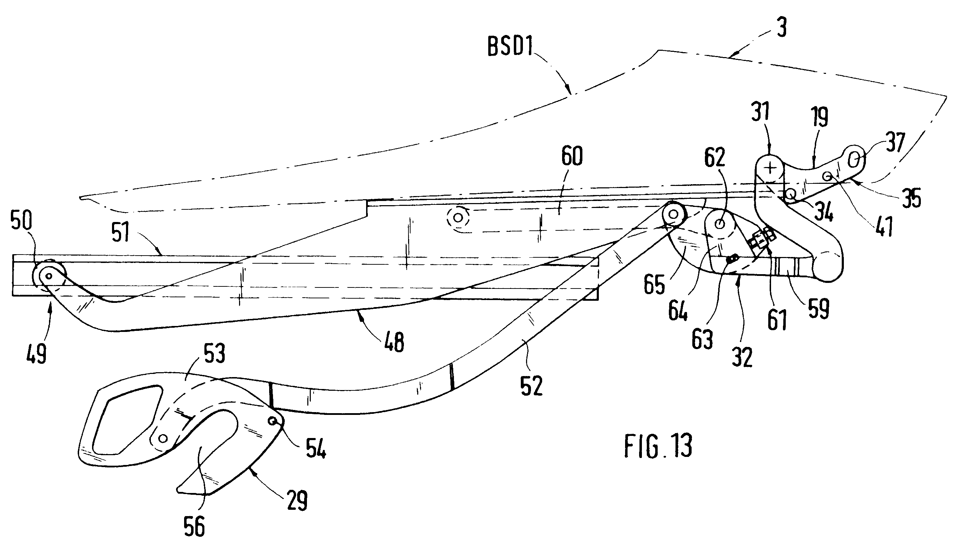

Die Betätigungseinrichtung 11 für das Verdeck 2 und den Verdeckkastendeckel 3 weist folgende Funktion auf:
Bei geschlossenem Verdeck 2 (Betriebsstellung BSV1) ist das Verdeck 2 über die lösbaren Verschlüsse mit dem Windschutzscheibenrahmen 4 verbunden und deckt den Fahrgastraum 6 nach oben hin ab.
Der Verdeckkastendeckel 3 befindet sich in seiner Schließstellung BSD1 und der Betätigungshebel 12 der Betätigungseinrichtung 11 nimmt dabei seine horizontale Ruhestellung B ein (Fig. 1). Die Stellung der einzelnen Bauteile der Verstelleinrichtung 14 in Schließstellung BSD1 des Verdeckkastendeckels ist in Fig. 13 dargestellt.

Zum Öffnen des Verdecks 2 und Unterbringen im heckseitigem Verdeckkasten 10 sind folgende Schritte erforderlich.
Zuerst werden die Verschlüsse des Verdecks 2 am Windschutzscheibenrahmen 4 gelöst. Danach wird der Betätigungshebel 12 nach oben in eine erste Richtung verschwenkt (Wirkstellung C). Diese beiden Maßnahmen können auch in umgekehrter Reihenfolge stattfinden.

Dieses Verschwenken des Betätigungshebels 12 hat zur Folge, daß die Kolbenstange 21 des Geberzylinders 17 in ihre maximal ausgefahrene Stellung und die Kolbenstange 22 des Nehmerzylinders 18 in ihre maximal eingefahrene Stellung bewegt werden. Die Kolbenstange 22 wirkt über den Bolzen 28 mit dem Antriebshebel 19 zusammen.

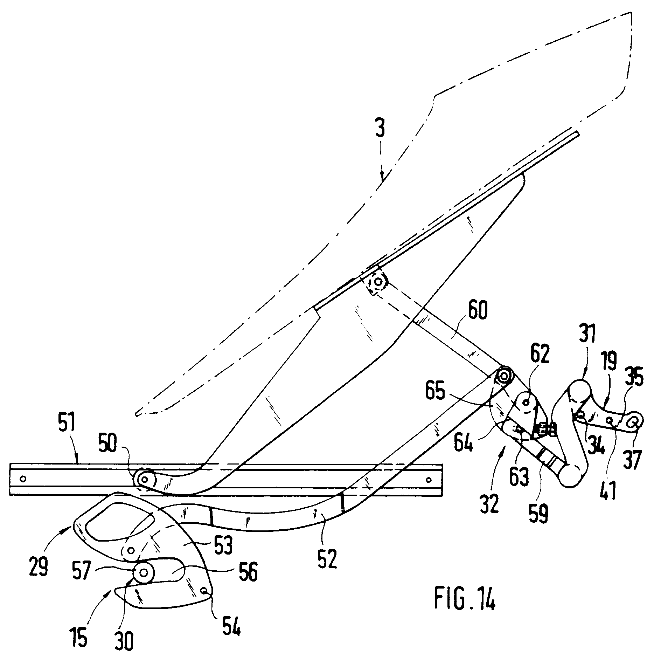

Beim Hochschwenken des Betätigungshebels 12 wird nach dem Entriegeln des Verdeckkastendeckels 3 der Antriebshebel 19 um den Bolzen 34 (Drehachse) im Uhrzeigersinn bewegt und über das Querrohr 31 und die beiden Lenkhebel 32 wird die Hinterkante des Verdeckkastendeckels 3 angehoben. Die Rolle 50 des Führungsarmes 48 gleitet in der Führungsschiene 51 nach hinten, bis der Verdeckkastendeckel 3 seine Offenstellung BSD 2 einnimmt. Ferner wird durch die Schubstange 52 das erste Kupplungsteil 29 der Kupplung 15 in eine Aufnahmestellung D bewegt. Die Lage der Verstelleinrichtung 14 in einer Zwischenstellung des Verdeckkastendeckels 3 zeigt Fig. 14, wogegen in Fig. 15 die Lage der Verstelleinrichtung bei geöffneter Stellung BSD2 des Verdeckkastendeckels dargestellt ist.
Das Verdeck 2 wird sodann manuell von der ersten Betriebsstellung BSV1 (Fig.1) nach hinten in die zweite Betriebsstellung BSV2 (Fig. 3) verschwenkt, in der das am Verdeck 2 vorgesehene zweite Kupplungsteil 30 in das erste Kupplungsteil 29 einrückt. Durch erneutes Bewegen des Betätigungshebels 12 von der Wirkstellung C in die umgekehrte Richtung (nach unten in die Ruhestellung B) werden durch die Kupplung 15 der Verdeckkastendeckel 3 und das Verdeck 2 gemeinsam nach unten in die Schließstellung BSD2 bzw. die dritte Betriebsstellung BSV3 bewegt (Fig. 4).
Bei diesem Schritt gleitet die Rolle 50 des Führungsarmes 48 in der Führungsschiene 51 wieder nach vorne, der Verdeckkastendeckel 3 wird abgesenkt, die Lenkhebel 32 werden von der aufgestellten Position in eine annähernd horizontale Lage bewegt und durch die Schubstange 52 wird der Kulissenhebel 53 verschwenkt, bis die Rolle 57 etwa benachbart eines hinteren Endes 87 der Schlitzöffnung 56 verläuft (Fig. 11). Das Aufspannen des Verdecks 2 erfolgt in umgekehrter Reihenfolge.

## Patentansprüche

1. Betätigungseinrichtung für ein Verdeck und einen Verdeckkastendeckel eines Kraftfahrzeuges, mit der von einem fahrerseitigen Sitz aus mittels eines verschwenkbaren Betätigungshebels und einer Verstelleinrichtung der Verdeckkastendeckel zwischen einer Schließstellung und einer Offenstellung und das Verdeck zwischen einer zweiten Betriebsstellung und einer dritten Betriebsstellung bewegbar sind, **dadurch gekennzeichnet**, daß durch Verschwenken des Betätigungshebels (12) in eine erste Richtung der Verdeckkastendeckel (3) durch die mit ihm zusammenwirkende Verstelleinrichtung (14) von einer Schließstellung (BSD1) in seine Offenstellung (BSD2) bewegt wird, in der ein erstes mit der Verstelleinrichtung (14) in Wirkverbindung stehendes Kupplungsteil (29) eine Aufnahmestellung (C) einnimmt, in der ein zweites am Verdeck (2) vorgesehenes Kupplungsteil (30) bei in der zweiten Betriebsstellung (BSV2) befindlichem Verdeck (2) in das erste Kupplungsteil (29) einrückbar ist und daß durch erneutes Verschwenken des Betätigungshebels (12) in eine zweite umgekehrte Richtung durch die eingerückte Kupplung (15) der Verdeckkastendeckel (3) und das Verdeck (2) gemeinsam nach unten in die Schließstellung (BSD1) bzw. die dritte Betriebsstellung (BSV3) bewegt werden.

2. Betätigungseinrichtung nach Anspruch 1, **dadurch gekennzeichnet**, daß zwischen Betätigungshebel (12) und Verstelleinrichtung (14) ein Übertragsorgan (13) vorgesehen ist, das mechanisch, pneumatisch, elektrisch, hydraulisch oder dgl. ausgebildet ist.

3. Betätigungseinrichtung nach Anspruch 2, **dadurch gekennzeichnet**, daß das durch ein Hydraulik-System (16) gebildete Übertragungsorgan (13) als geschlossenes Geber-Nehmerzylindersystem ausgebildet ist, wobei der Geberzylinder (17) mit dem Betätigungshebel (12) zusammenwirkt und der Nehmerzylinder (18) mit einem Antriebshebel (19) der Verstelleinrichtung (14) in Wirkverbindung steht und Geberzylinder (17) und Nehmerzylinder (18) über zwei getrennte Hydraulikleitungen (20, 20') miteinander verbunden sind.

4. Betätigungseinrichtung nach Anspruch 3, **dadurch gekennzeichnet**, daß der Geberzylinder (17) an einer den Betätigungshebel (12) aufnehmenden Grundplatte (23) angeordnet ist und daß das freie Ende einer Kolbenstange (21) des Geberzylinders (17) mit dem verschwenkbaren Betätigungshebel (12) gelenkig verbunden ist.

5. Betätigungseinrichtung nach Anspruch 3, **dadurch gekennzeichnet**, daß der Nehmerzylinder (18) an einer Aufnahme (26) einer Lagerbrücke (27) gehalten ist und daß das freie Ende einer Kolbenstange (22) des Nehmerzylinders (18) über einen Bolzen (28) mit einer Schlitzöffnung (37) eines Antriebshebels (19) der Verstelleinrichtung (14) in Wirkverbindung steht.

6. Betätigungseinrichtung für ein Verdeck und einen Verdeckkastendeckel eines Kraftfahrzeuges mit einem vom fahrerseitigen Sitz aus verschwenkbaren Betätigungshebel, **dadurch gekennzeichnet**, daß der Betätigungshebel (12) unmittelbar am längsverstellbaren Sitzteil (8) des fahrerseitigen Sitzes (7) angebracht ist.

7. Betätigungseinrichtung nach Anspruch 1, **dadurch gekennzeichnet**, daß die Verstelleinrichtung (14) ein an der Lagerbrücke (27) drehbar aufgenommenes Querrohr (31) umfaßt, das über den Antriebshebel (19) mit dem Übertragungsorgan (13) in Wirkverbindung steht, und daß das Querrohr (31) an jeder Längsseite über einen starr mit dem Querrohr (31) verbundenen Lenkhebel (32) mit dem Verdeckkastendeckel (3) gelenkig verbunden ist, und daß ferner am Verdeckkastendeckel (3) an jeder Längsseite ein langgestreckter Führungsarm (48) angebracht ist, der an seinem freien Ende eine drehbare Rolle (50) aufweist, die in eine aufbauseitig feststehende, längsgerichtete Führungsschiene (51) eingreift und in dieser verschiebbar gelagert ist.

8. Betätigungseinrichtung nach den Ansprüchen 1 und 7, **dadurch gekennzeichnet**, daß der Lenkhebel (32) über eine Schubstange (52) mit dem ersten, mit der Verstelleinrichtung (14) zusammenwirkenden Kupplungsteil (29) gelenkig verbunden ist.

9. Betätigungseinrichtung nach Anspruch 1, **dadurch gekennzeichnet**, daß das erste Kupplungsteil (29) durch einen an einer aufbauseitig feststehenden Konsole (55) schwenkbar gelagerten Kulissenhebel (53) gebildet wird, der eine längliche, einseitig offene Schlitzöffnung (56) aufweist, in die das zweite, verdeckseitig angeordnete Kupplungsteil (30) einrückbar bzw. ausrückbar ist.

10. Betätigungseinrichtung nach den Ansprüchen 1 und 9, **dadurch gekennzeichnet**, daß das zweite Kupplungsteil (30) durch eine am Verdeck (2) angebrachte drehbare Rolle (57) gebildet wird.

11. Betätigungseinrichtung nach Anspruch 10, **dadurch gekennzeichnet**, daß die Rolle (57) an einem Hauptspiegel (58) des Verdecks (2) angeordnet ist und zwar in einem unteren Bereich benachbart eines Verdecklagers (5).

12. Betätigungseinrichtung nach Anspruch 7, **dadurch gekennzeichnet**, daß der starr mit dem Querrohr (31) verbundene Lenkhebel (32) aus zwei miteinander verbundenen Lenkern (59, 60) zusammengesetzt ist, die über eine Gelenkverbindung (62) und eine Schraubverbindung (63) zusammenwirken und daß zwischen beiden Lenkern (59, 60) eine Einstellvorrichtung (61) vorgesehen ist.

13. Betätigungseinrichtung nach Anspruch 12, **dadurch gekennzeichnet**, daß beide Lenker (59, 60) des Lenkhebels (32) in einem gemeinsamen Verbindungsbereich jeweils eine Platte (64, 65) aufweisen, wobei die beiden aufeinanderliegenden Platten (64, 65), der Lenker (59, 60) über die Einstelleinrichtung (61) relativ zueinander verstellbar sind.

14. Betätigungseinrichtung nach den Ansprüchen 12 und 13, **dadurch gekennzeichnet**, daß die Schraubverbindung (63) eine Befestigungsschraube (67) umfaßt, die sich mit einem Kopfabschnitt an der Außenseite der zweiten, mit dem zweiten Lenker (60) verbundenen Platte (65) abstützt, durch eine längliche Schlitzöffnung (66) der zweiten Platte (65) hindurchgeführt und in eine Gewindebohrung (69) der ersten Platte (64) bzw. des ersten Lenkers (59) eingedreht ist.

15. Betätigungseinrichtung nach den Ansprüchen 12 bis 14, **dadurch gekennzeichnet**, daß die Gelenkverbindung (62) einen Zapfen (70) umfaßt, der durch korrespondierende zylindrische Öffnungen (71, 72) beider Platten (64, 64) und des Lenkers (60) hindurchgeführt ist.

16. Betätigungseinrichtung nach den Ansprüchen 12 bis 15, **dadurch gekennzeichnet**, daß die Einstelleinrichtung (61) eine Stellschraube (75) umfaßt, die in eine Gewindebohrung (74) einer querverlaufenden Wand (73) der zweiten Platte (65) eingedreht ist und mit ihrem, dem Kopf abgekehrten Ende mit einem Randabschnitt (76) der ersten Platte (64) zusammenwirkt, dergestalt, daß durch Drehen der Stellschraube (75) die zweite Platte (65) relativ zur ersten Platte (64) verstellbar ist.

17. Betätigungseinrichtung nach den Ansprüchen 1 und 7, **dadurch gekennzeichnet**, daß die Lagerbrücke (27) für das Querrohr (31) und den Nehmerzylinder (18) mehrteilig ausgebildet ist und einerseits an einer querverlaufenden Rückwand des Verdeckkastens (10) und andererseits an seitlich außenliegenden Federbeindomen (79) abgestützt und in Lage gehalten ist.

18. Betätigungseinrichtung nach Anspruch 17, **dadurch gekennzeichnet**, daß sich die Lagerbrücke (77) aus einem Mittelteil (80) und zwei mit diesem verbundenen Seitenteilen (81) zusammensetzt, wobei am Mittelteil (80) die beiden Lagerungen für das Querrohr (31) und die Aufnahme (26) für den Nehmerzylinder (18) des Hydrauliksystems (16) vorgesehen sind.

19. Betätigungseinrichtung nach einem oder mehreren der vorangegangenen Ansprüche, **dadurch gekennzeichnet**, daß am Antriebshebel (19) ein federbelastetes schwenkbares Verriegelungsorgan (38) einer Verriegelungseinrichtung (39) für den Verdeckkastendeckel (3) gelagert ist, wobei ein Schenke (42) des Verriegelungsorganes (38) über einen Bolzen (28) mit dem Nehmerzylinder (18) des Hydrauliksystems (16) in Wirkverbindung steht.

20. Betätigungseinrichtung nach einem oder mehreren der vorangegangenen Ansprüche, **dadurch gekennzeichnet**, daß das dem Querrohr (31) abgekehrte Ende des Lenkhebels (32) mit dem Führungsarm (48) drehbar verbunden ist.

21. Betätigungseinrichtung nach Anspruch 9, **dadurch gekennzeichnet**, daß am Kulissenhebel (53) oberhalb der Schlitzöffnung (56) ein Kurvenabschnitt (83) ausgebildet ist, der bei nicht vollständig geöffnetem Verdeckkastendeckel (3) mit dem zweiten Kupplungsteil (30) zusammenwirkt, dergestalt, daß ein Bewegen des Verdecks (2) von der zweiten Betriebsstellung (BSV2) in die dritte Betriebsstellung (BSV3) verhindert wird.

22. Betätigungseinrichtung nach einem oder mehreren der vorangegangenen Ansprüche, **dadurch gekennzeichnet**, daß am Führungsarm (48) benachbart der drehbaren Rolle (50) ein querverlaufender Winkel (85) angebracht ist, der ein Bewegen des Verdecks (2) von der zweiten Betriebsstellung (BSV2) in die dritte Betriebsstellung (BSV3) bei geschlossenem Verdeckkastendeckel (3) verhindert.

23. Betätigungseinrichtung für ein Verdeck und einen Verdeckkastendeckel eines Kraftfahrzeuges, mit der von einem fahrerseitigen Sitz aus mittels eines verschwenkbaren Betätigungshebels und einer Verstelleinrichtung der Verdeckkastendeckel zwischen einer Schließstellung und einer Offenstellung und das Verdeck von einer zweiten Betriebsstellung und in eine dritte Betriebsstellung bewegbar sind, **dadurch gekennzeichnet**, daß mittels eines einzigen Betätigungshebels (12) die am Verdeckkastendeckel (3) angreifende Verstelleinrichtung (14) ansteuerbar ist und daß der Verdeckkastendeckel (3) über eine trennbare Kupplung (15) mit dem Verdeck (2) verbindbar ist, wobei zwischen einer zweiten Betriebsstellung (BSV2) und einer dritten Betriebsstellung (BSV3) des Verdecks (2) durch die Kupplung (15) eine Zwangssteuerung des Verdecks (2) in Abhängigkeit von der Bewegung des Verdeckkastendeckels (3) erfolgt.

24. Verfahren zum Betätigen einer Betätigungseinrichtung für ein Verdeck und einen Verdeckkastendeckel, **dadurch gekennzeichnet**, daß zuerst durch Verschwenken des Betätigungshebels (12) in eine erste Richtung der Verdeckkastendeckel (3) von einer Schließstellung (BSD1) in eine angehobene Offenstellung (BSD2) bewegt wird, danach das vom Windschutzscheibenrahmen (4) entriegelte Verdeck (2) manuell nach hinten in eine zweite Betriebsstellung (BSV2) bewegt wird, in der das zweite Kupplungsteil (30) in das erste Kupplungsteil (29) eingreift und daß anschließend durch erneutes Verschwenken des Betätigungshebels (12) in die zweite, umgekehrte Richtung der Verdeckkastendeckel (3) und das Verdeck (2) gemeinsam nach unten in eine Schließstellung (BSD1) bzw. eine dritte Betriebsstellung (BSV3) bewegt werden und daß das Aufspannen des Verdecks (2) in umgekehrter Reihenfolge erfolgt.

25. Betätigungseinrichtung für ein Verdeck und einen Verdeckkastendeckel eines Kraftfahrzeuges, mit der von einem fahrerseitigen Sitz aus mittels eines verschwenkbaren Betätigungshebels und einer Verstelleinrichtung der Verdeckkastendeckel zwischen einer Schließstellung und einer Offenstellung und das Verdeck zwischen einer zweiten Betriebsstellung und einer dritten Betriebsstellung bewegbar sind, **dadurch gekennzeichnet,** daß der Betätigungshebel (12) über ein als geschlossenes Geber-Nehmerzylindersystem ohne Ausgleichsbehälter ausgebildetes Hydrauliksystem (16) mit der heckseitig angeordneten Verstelleinrichtung (14) in Wirkverbindung steht.
